# EUROPÄISCHE PATENTSCHRIFT

(11) **EP 2 923 813 B1**
(45) Veröffentlichungstag und Bekanntmachung des Hinweises auf die Patenterteilung: **03.08.2022**
(21) Anmeldenummer: 15000933.0
(22) Anmeldetag: 02.06.2010
(51) Int. Cl.: B29C 44/58, B29C 33/56, B29C 33/30, B29C 33/42

(54) **FORMEINSATZ FÜR EINE FORMTEILFORM UND VERFAHREN ZUM HERSTELLEN EINES FORMTEILS**
MOULD INSERT FOR A MOULD AND METHOD FOR PRODUCING A MOULD
INSERT DE MOULAGE POUR UN MOULE ET PROCÉDÉ DE PRODUCTION D'UN ARTICLE

(30) Priorität: 03.06.2009 DE 102009023684; 04.03.2010 DE 102010010330
(43) Veröffentlichungstag der Anmeldung: 30.09.2015
(62) Teilanmeldung aus: 10742393.1
(73) Patentinhaber: Wiesmayer, Otto, 93333 Neustadt/Donau (DE)
(72) Erfinder: Wiesmayer, Otto, 93333 Neustadt/Donau (DE)
(74) Vertreter: Farago-Schauer, Peter Andreas

(56) Entgegenhaltungen:
- EP-A1- 1 190 828
- EP-A2- 1 995 030
- DE-A1-102007 022 327
- GB-A- 1 414 465
- US-A- 4 447 372

## Beschreibung

Die Erfindung betrifft einen Formeinsatz gemäß Anspruch 1. Zudem betrifft die Erfindung ein Verfahren zum Herstellen eines Formteils gemäß Anspruch 3.

Zum Herstellen von Schaumformteilen aus Schaumsystemen wie zum Beispiei Weich-, Halbhart-, Hart- und Integralschaum werden üblicherweise Schäumformen verwendet, welche, je nach Verwendungszweck und benötigter Ausprägung beziehungsweise Staridzeit, aus verschiedenen Basismaterialien hergestellt sind. So kommen zum Beispiel für Prototypen- oder Vorserienformen Kunststoff, Kunststoffgießharze oder Kunststoffplatten zum Einsatz, während für Serienzwecke beziehungsweise zur Ausbringung hoher Stückzahlen und komplexer Teile, Formen aus Aluminium und/oder Stahl verwendet werden.

Diese Formen bestehen meist aus einer Unter- und Oberschale, die mit seitlichen Scharnieren verbunden sind. Geschlossen bilden die beiden "Hälften" einen gewünschten Hohlraum, welcher auch Kavität genannt wird und der das benötigte Formteil bildet.Aus dem Stand der Technik sind mehrere Patentanmeldungspublikationen bekannt welche sich allgemein mit der Herstellung der oben bezeichneten Schaumformteile befassen. So beansprucht die GB 1 414 465 A ein Verfahren zur Herstellung von Schaumformteilen welches ein Beschichten von zweiteiligen Formen aus Metall mithilfe eines aufgetragenen Thermoplasts beinhaltet. Dieses eingebrachte Thermoplast liegt an der Formteilinnenseite an und kann die äußere Form des Shaumforteils aufweisen Ebenfalls bekannt ist die EP 1 190 828 A1 welche ein Verfahren offenbart, dass eine elastomere Polyurethanhaut verwendet, die eine Vorderseite sowie Rückseite aufweist, die in eine zweiteile Formteilform eingelegt werden kann, um ebenfalls ein Schaumformteil herzustellen. Dieses Verfahren verwendet stets einen weiteren zusätzlichen Liner an der oberen Formteilform. Zusätzlich kann noch die EP 1 995 030 A2 angeführt werden, welche eine Formteilform beansprucht die zweiteilig ist, bestehend aus flachem Deckel sowie einem Unterteil. Hier wurde zusätzlich eine weitere flexible Komponente für den Unterteil beansprucht, welche als Formhilfe zur Entformung herangezogen werden kann.

Die GB 1 414 465 A offenbart einen Formeinsatz gemäß dem Oberbegriff des Anspruchs 1.

Zum Entformen von "Hinterschnitten", Rippen oder Ähniichem werden Schieber und Einsätze oder Ähnliches verwendet, weiche manuell, halbautomatisch und auch vollautomatisch eingelegt und betätigt werden. In die Kavität wird bei geöffneter Form und/oder bei geschlossener Form durch ein Angusssystem über einen Mischkopf ein aufbereitetes Schaumsystem eingebracht.

Um die Teile bei der Entformung nicht zu beschädigen beziehungsweise sie unversehrt entnehmen zu können, kommen diverse Trennmittel zum Einsatz. Diese Trennmittel verhindern ein "Verkleben" der Schaumteile mit der Oberfläche der Formen. Meist kommen Trennmittel auf Wachsbasis zum Einsatz, welche durch Lösungsmittel verflüssigt werden, um diese mittels Sprühpistole oder Pinsel auf die Formen aufzubringen.

Diese Trennmittel müssen vor jedem Zyklus aufgebracht werden. Dabei verflüchtigt sich das Lösungsmittel und das Wachs hinterlässt eine relativ dünne Schicht an der Oberfläche der Formen.

Dies ist ein eigenständiger Prozess, welcher auch stabil sein muss, damit eine gleichbleibende Qualität der Teile gewährleistet werden kann. Die Trennmittel werden üblicherweise manuell durch einen Arbeiter an der Schäumanlage per Spritzpistole eingebracht und die entstehenden Sprühnebel und Lösungsmitteldämpfe müssen abgesaugt werden.

Durch die sich immer wiederholende Einbringung der Trennschicht bildet sich insbesondere an kleinen Radien oder den Rippen eine dicker werdende Wachsschicht, welche regelmäßig entfernt werden muss.

Das Einbringen der Trennschicht, sowie das regelmäßige Entfernen der Wachsrückstände bedeutet einen erheblichen Zeit- und Kostenaufwand, welcher mit einer immer wiederkehrenden Unterbrechung des Produktionsprozesses verbunden ist.

Auf den Schaumteilen selbst verbleibt ebenfalls eine dünne Trennmittelschicht. Diese Schicht ist nur dann unproblematisch, wenn das Teil nicht weiter bearbeitet werden soll, es sich also um ein Fertigteil handelt.

Sollten die Schaumteile jedoch anschließend kaschiert werden, erschwert diese Schicht aus Trennmittelrückständen ein Verkleben des Schaumes mit dem kaschierenden Material. Kaschieren erfolgt beispielsweise mit einem Leder oder einer Folie. Somit muss das Schaumteil vor dem Kaschieren gereinigt werden.

Die beschriebenen Trennmittel werden ebenfalls bei dem Herstellen von Sprühhäuten oder tiefgezogenen Folien eingesetzt. Für das Herstellen von Sprühhäuten und tiefgezogenen Folien kommen häufig sogenannte Galvanoformen zum Einsatz. Mittels dieser Galvanoformen werden beispielsweise Oberflächen für Türverkleidungen, Schalttafeln oder Mittelkonsolen hergestellt.

Auf diese Galvanoformen werden beispielsweise zweikomponentige Polyurethansysteme gesprüht. Dabei bildet sich eine Haut, deren Dicke je nach Eintragungsmenge variiert und nach entsprechender Reaktionszeit der Form entnommen wird. Um die entstandene Haut entformen beziehungsweise entnehmen zu können, müssen, wie bereits oben erläutert, Trennmittel zum Einsatz kommen, welche entweder manuell oder robottorisch eingebracht werden.

Die so hergestellten Sprühhäute werden häufig mit einem Träger unterschäumt, sodass sich komplexere Bauteile ergeben. Auch hierzu muss gewährleistet sein, dass die Sprühhaut von etwaigen Trennmitteln befreit ist.

Weiterhin ist nachteilig, dass Galvanoformen sehr teuer in der Herstellung sind. Dies liegt unter Anderem daran, dass diesen Formen oft eine Oberflächennarbung aufgeprägt ist, welche beispielsweise der herzustellenden Haut eine lederartig genarbte Oberfläche aufprägen soll. Schon kleinste Berührungen durch einen Arbeiter können eine solche Galvanoform zerstören.

Weiterhin werden Formschaumteile häufig mit sogenannten Coatings überzogen. Bei einem solchen Coating handelt es sich um eine Schutzschicht. Ohne diese Schutzschicht neigen die Oberflächen von Schaumformteilen bei Einwirkung von UV-Licht zum Verblassen und Verspröden. Die Schutzschicht verhindert das Einwirken des UV-Lichts beispielsweise durch Absorption der UV-Strahlung.

Coatings sind beispielsweise Lacke, welche vor den Schäumprozessen in die Schaumformen eingebracht werden, um sich dann homogen mit dem Schaum zu verbinden. Nach einem Entformen ist der Schaum dann praktisch mit dem "Coat" überzogen. Die Ausschussrate bei mit Coating überzogenen Formschaumteilen ist relativ hoch und kann bis zu 30 % oder mehr betragen. Zum sauberen Entformen müssen ebenfalls Trennmittel eingesetzt werden.

Bei dem Herstellen von Teppichen, wie sie beispielsweise im Fahrzeugbau zum Einsatz kommen, wird die Rückseite des Teppichs - meist ein thermisch vorgeformter Teppich - mit einer relativ dünnwandigen Schaumschicht versehen. Ziel dieser Maßnahme ist es, den Trittkomfort zu erhöhen, Toleranzen aufzufangen, Ausfransungen zu verhindern und eine Geräuschdämmung zu erreichen. Um diese großflächige Schaumhaut nach der Reaktionszeit dem Werkzeug entnehmen zu können, wird meist eine dünnwandige Folie, welche zuvor thermoverformt wurde, als Trennmedium auf die entsprechende Werkzeugseite eingelegt und nach dem Abziehen entsorgt. Dieser Prozess ist arbeits- und kostenintensiv.

Aufgabe der Erfindung ist es, den Stand der Technik zu verbessern.

Gelöst wird die Aufgabe durch einen Formeinsatz für eine Formteilform, insbesondere eine Schaum- oder Galvanoform mit einem Oberteil und einem diesem zugeordneten Unterteil, mit einer Kavität, insbesondere einem Gesenk, wobei die Formteilform einem in die Kavität eingebrachten Material, insbesondere einem Schaum, eine Form aufprägt, wobei der Formeinsatz an der Formteilform anordenbar ist, sodass im angeordneten Zustand eine volumenverringerte Kavität gebildet ist und der Formeinsatz zum Aufprägen des Materials beiträgt.

Somit kann ein zügiger Austausch der eigentlich formgebenden Kavität gewährleistet werden.

Weiterhin kann so die Reaktionszeit durch das Entfernen des Formeinsatzes von der Formteilform unabhängig abgewartet werden, während durch neu eingebrachte Formeinsätze in die Formteilform bereits das nächste Schaumteil gefertigt wird.

Folgendes begriffliche sei erläutert:

Die "Formteilform" ist eine üblich gefertigte Formteilform beispielsweise aus Aluminium oder Stahl, welche gewöhnlicherweise zum Herstellen eines Formteils verwendet wird. Insbesondere umfasst die Formteilform eine "Schaumform" mit einem Oberteil und einem diesem zugeordneten Unterteil. Dabei können Ober- und Unterteil voneinander separiert werden, um ein Formteil zu entnehmen. Zudem können im geschlossenen Zustand der Schaumform Schäume eingespritzt werden, welche die durch das Oberteil und Unterteil gebildete Form nachbilden, wodurch sich das Schaumformteil bildet.

Weiterhin kann die Formteilform als Galvanoform ausgestaltet sein. Die Galvanoform kann ebenfalls ein Oberteil und ein diesem zugeordnetes Unterteil aufweisen, wobei üblicherweise lediglich ein Oberteil oder ein Unterteil verwendet wird. Mit Galvanoformen können dünnflächige Gebilde wie beispielsweise Häute hergestellt werden. Besonders hochwertige Häute werden dadurch erzeugt, dass die Galvanoform angeätzt wird, sodass diese eine sogenannte Vernarbung aufweist. Somit können Häute erzeugt werden, welche beispielsweise eine lederartige Oberflächenstruktur aufweisen.

Der "Formeinsatz" kann die Formteilform vollständig ausfüllen oder nur Teile der Formteilform bedecken. Letztendlich kann der Formeinsatz eine Platte oder sonstiger körperlicher Gegenstand sein, welcher mit dem Formteil zusammen entformt wird.

Die "Kavität" ist ein Hohlraum, welcher durch die Formteilform gebildet wird. Bei einer einteiligen Formteilform wird in diesem Zusammenhang insbesondere von dem "Gesenk" gesprochen. Der Kavität und dem Gesenk ist gemein, dass beim Einbringen eines Materials, wie beispielsweise eines Schaumes, die Form der Kavität oder des Gesenks durch das Material nachgebildet wird.

Das "eingebrachte Material" ist insbesondere ein flüssiges oder aufgeschäumtes Material, welches durch einen Aushärtungsprozess einen festen Körper bildet. So kann das Material beispielsweise ein Kunststoffschaum sein, insbesondere ein Weich-, Halbhart-, Hart- und/oder Integralschaum. Zudem können Epoxidharze als eingebrachtes Material verwendet werden. Ebenfalls können getränkte Fasern wie epoxidharzgetränkte Fasermatten (Prepregs) eingebracht werden, welche in der Kavität aushärten. Ebenfalls umfasst sein können pulverige Materialien wie sie beispielsweise in einem Slush Molding Verfahren zum Einsatz kommen.

"Anordenbar" bedeutet in diesem Zusammenhang insbesondere, dass der Formeinsatz auf die Formteilform angepasst ist, sodass die Formteilform den Formeinsatz aufnimmt und mittels des Formeinsatzes das herzustellende Formteil herstellbar ist. Bevorzugt ist eine formschlüssige Anordnung, sodass die Formteilform gleichförmig auf den Formeinsatz einwirken kann.

Um Formteile trennmittelfrei herzustellen, kann eine den volumenverringernden Kavitäten zugeordneten Oberfläche des Formeinsatzes eine geringe oder keine Grenzflächenspannung aufweisen. Dabei ist die Grenzflächenspannung sowohl vom eingebrachten Material als auch durch das Material der zugeordneten Oberfläche zu bestimmen. Die geringe Grenzoberflächenspannung bezieht sich insbesondere auf die Materialien Stahl und Aluminium, welche die Oberfläche einer üblichen Formteilform bilden.

Da die quantitativen Werte mir die Grenzflächenspannung von dem verwendeten System abhängig sind, welches mit der Oberfläche interagiert, ist es ausreichend, dass für das spezielle System die obige Bedingung erfüllt ist. Insbesondere bei dem System "Schaum" ist es wichtig, dass im Fall des ausgehärteten Schaums die Grenzflächenspannung zwischen ausgehärtetem Schaum und der Oberfläche des Formeinsatzes niedriger als bei Aluminium oder Stahl ist.

In der Literatur wird statt von der Grenzflächenspannung häufig auch von einer Oberflächenspannung gesprochen. Diese Begriffe sind im Folgenden synonym zu betrachten.

Da lediglich die Materialeigenschaft der Oberfläche des Formeinsatzes für die Trennmittelfreiheit wesentlich ist, kann die der volumenverringernden Kavität zugeordnete Oberfläche des Formeinsatzes beschichtet sein.

Die der volumenverringernden Kavität zugeordnete Oberfläche des Formeinsatzes ist durch einen Kunststoff gebildet. Somit können Materialalternativen zu Aluminium und Stahl bereitgestellt werden.

Geringe Grenzoberflächenspannungen beziehungsweise Grenzflächenspannungen können dadurch erreicht werden, dass die der volumenverringernden Kavität zugeordnete Oberfläche des Formeinsatzes durch ein Polyolefin, insbesondere durch Polyethylen, gebildet ist.

Der Formeinsatz weist ein Temperaturleitelement auf, welches aus Metall gefertigt ist. Durch dieses Temperaturleitelement kann der Temperaturgradient von dem Material in den Formeinsatz zur eigentlichen Formteilform, beispielsweise aus Aluminium oder Stahl, vergrößert oder verringert werden. Somit kann sowohl ein Heizen des Materials im Formeinsatz als auch ein effektives Kühlen des Materials im Formeinsatz realisiert werden. Vorzugsweise kommen Metalle mit guten Wärmeleiteigenschaften zum Einsatz, wobei auch andere Wärmeleiter oder Isolatoren eingesetzt werden können.

Um ebenfalls eine gute Temperaturleitfähigkeit des Formeinsatzes zu gewährleisten, beträgt die Materialdicke des Formeinsatzes zwischen 0,8 mm und 8 mm und kann besonders bevorzugt etwa 2,5mm betragen. Dabei ist es mir die Wärmeleitung besonders vorteilhaft, sehr geringe Materialdicken zu gewährleisten.

Der Formeinsatz ist als ein Spritzgussteil gefertigt. Dadurch können Formeinsätze in großen Stückzahlen hergestellt werden, wodurch sich die Kosten erheblich verringern.

Um ein definiertes Befestigen und ein definiertes Lösen des Formeinsatzes in oder von der Formteilform zu gewährleisten, weist der Formeinsatz ein Befestigungselement auf, welches ein lösbar festes Anordnen mit der Formteilform ermöglicht. Insbesondere sind Klemm- oder Schraubvorrichtungen mögliche Ausführungsformen für das Befestigungselement.

Um dem Formeinsatz eine Stabilität aufzuprägen, bildet der Formeinsatz eine Trägerstruktur aus.

Um Gewicht zu reduzieren oder eine bestimmte Wärmeisolation auszubilden, weist die Trägerstruktur Hohlräume auf.

Zusammengefügte Teilformeinsätze bilden den Formeinsatz. Somit können insbesondere großflächige Formteile wie beispielsweise Teppichverkleidungen in Automobilen hergestellt werden.

Um mit den Teilformeinsätzen einen möglichst homogenen Formeinsatz zu bilden, weisen die Teilformeinsätze Verbindungselemente auf, welche einen stabilen Formeinsatz bilden können. Die Verbindungselemente können dabei beispielsweise eine Art Nut- und Feder-prinzip ausprägen. Auch Schraubverbindungen mit zugeordneten Gewinden sind realisierbar.

In einem weiteren Aspekt der Erfindung kann die Aufgabe gelöst werden durch eine Vorrichtung zum Herstellen eines Formteils mit einer Formteilform mit einer Kavität, welche einem eingebrachten Material eine Form aufprägt, welche nach einem zuvor beschriebenen Formeinsatz in der Formteilform anordnenbar ist, sodass bei angeordnetem Formeinsatz eine volumenverringerte Kavität gebildet ist, welche einem eingebrachten Material eine volumenverringerte Form aufprägt. Somit können Formteile hergestellt werden, welche die zuvor beschriebenen vorteilhaften Eigenschaften des Formeinsatzes verwenden.

Um eine optimale Verbindung von Formteilform und Formeinsatz zu gewährleisten, kann die volumenverringerte Kavität eine herzustellende Form des Formteils ausprägen, wobei die durch die Formteilform ausgebildete Kavität um die Materialdicken des Formeinsatzes vergrößert ist.

Die Formteilform weist eine zugeordnete Aufnahme für das Befestigungselement auf. Somit kann Vorteilhafterweise eine lösbare Verbindung zwischen Formteilform und Formeinsatz gewährleistet werden.

Um Materialalternativen für die Formteilform bereitzustellen, ist die Formteilform aus einem Metall, insbesondere Edelstahl, Stahl, Aluminium und/oder Magnesium, oder einer Metalllegierung gefertigt.

Um eine Kavität mit optimaler dreidimensionaler Form auszubilden, weist die Formteilform ein Oberteil und ein Unterteil auf, wobei sowohl im Oberteil als auch im Unterteil oder auch in beiden ein Formeinsatz einbringbar ist.

In einem weiteren Aspekt kann die Aufgabe gelöst werden durch ein Verfahren 2. gemäß Anspruch 3.

Um den Formeinsatz mehrfach zu verwenden, können bei dem Verfahren vor einem Entfernen des Formeinsatzes weitere Formteile hergestellt werden.

In einer weiteren Ausprägungsform wird vor dem Einspritzen des formbaren Materials auf dem Formeinsatz eine Coatíng-Schicht aufgebracht, welche beim Herstellen dem Formteil aufgeprägt wird. Somit liegt ein Formteil vor, welches mit der Coating-Schicht eine feste Verbindung ausbildet. Somit ist das Formteil beispielsweise vor schädlicher UV-Strahlung geschützt.

Um zusammengesetzte Bauteile herzustellen, kann vor dem Einspritzen des formbaren Materials in die Kavität oder in die volumenverringerte Kavität ein Formteilträger, insbesondere ein Kunststoffträger, eingebracht werden. Dabei ist lediglich darauf zu achten, dass der Formteilträger eine Verbindung zum Material in der Kavität ausbilden kann.

Nach dem Entfernen des Formteils wird der Formeinsatz gegen einen weiteren Formeinsatz ausgetauscht. So kann auf einen Austausch der Formteile verzichtet werden und es kommt lediglich die kostengünstigeren Formeinsätze zur Verwendung.

Um die Kosten weiter zu verringern, wird ein gebrauchter Formeinsatz gereinigt und wiederverwendet.

Bei dem Verfahren zum Herstellen eines Formteils kann Trennmittel jeglicher Art vermieden werden. Somit können die Kosten für Trennmittel bei dem Herstellen eines Formteils reduziert werden. Trennmittel stellen sämtliche Stoffe, Flüssigkeiten, Pulver oder Dergleichen dar, welche beim Herstellen des Form teils verwendet werden, ohne für die eigentliche Funktion des Formteils notwendig zu sein und lediglich dem besseren Entformen dienen.

Im Weiteren wird die Erkundung anhand von Ausführungsbeispielen näher erläutert.

Dabei zeigt
- Figur 1: eine schematische Darstellung eines Werkzeuges mit separierten Formteilformen und Formeinsätzen zum Herstellen eines Formteils,
- Figur 2a: eine schematische Darstellung eines Schnittes durch ein Werkzeug für ein Schaumformteil mit Kunststoffformteilträger,
- Figur 2b: einen vergrößerten Teilausschnitt der Figur 2a mit einem verfülltem Schaumsystem und einem Coating,
- Figur 3a: eine schematische Darstellung eines Schnittes durch ein Werkzeug für ein Schaumformteil,
- Figur 3b: einen Teilausschnitt des Werkzeuges aus Figur 3a,
- Figur 4a: eine schematische Darstellung eines thermogeformten Teppichs für Fahrzeugböden,
- Figur 4b: eine reduzierte schematische Darstellung eines Schnittes eines Werkzeugs zum Herstellen des thermogeformten Teppichs aus Figur 4a,
- Figur 5: eine schematische Darstellung eines Galvanoformwerkzeugs zum Herstellen von Sprühhäuten,

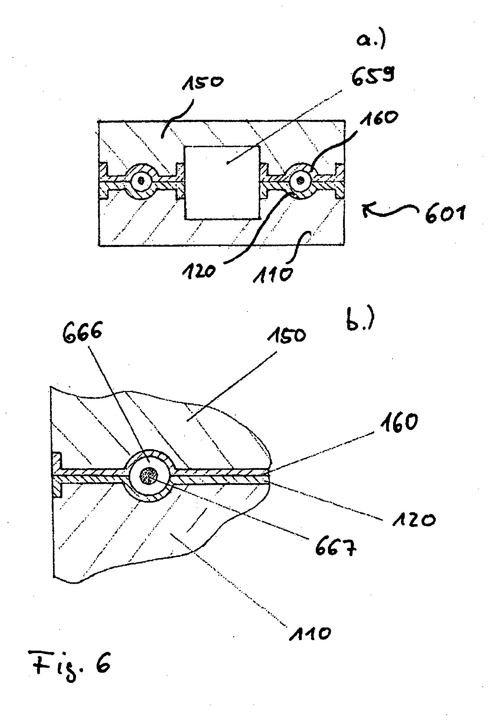

- Figur 6a: eine schematische Darstellung eines Schnittes durch ein Werkzeug zum Herstellen eines Lenkrades und
- Figur 6b: einen vergrößerten Ausschnitt des Werkzeuges aus Figur 6a

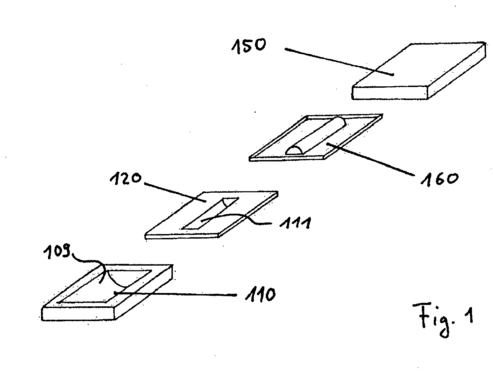

Eine Grundform eines erfindungsgemäßen Werkzeugs (Figur 1) besteht aus einer Formteilform (Unterteil) 110, einem dem Formteilform (Unterteil) 110 zugeordneten Formeinsatz (Unterteil) 120 und einer Formteilform (Oberteil) 150, einem dem Formteilform (Oberteil) 150 zugeordneten Formeinsatz (Oberteil) 160.

Die Formteilform (Unterteil) 110 weist eine Teilkavität 109 auf. Das Gleiche gilt analog für die Formteilform (Oberteil) 150 (nicht dargestellt). Beide Teilkavitäten bilden zusammengefügt eine Kavität. Der Formeinsatz (Unterteil) 120 weist eine volumenverringerte Teilkavität 111 auf. Analoges gilt für den Formeinsatz (Oberteil) 160 (nicht dargestellt). Beide volumenverringerten Teilkavitäten bilden eine volumenverringerte Kavität.

Sowohl die Formteilform (Unterteil) 110 als auch die Formteilform (Oberteil) 150 sind so ausgestaltet, dass die zugeordneten Formeinsätze 120, 160 durch die Formteilformen 150, 110 formschlüssig aufgenommen werden.

Werden Formteilform (Oberteil) 150 und Formteilform (Unterteil) 110 mit den Formeinsätzen 120, 150 zusammengesetzt, bildet sich das Formwerkzeug, welches zum Herstellen eines Formteils verwendet wird.

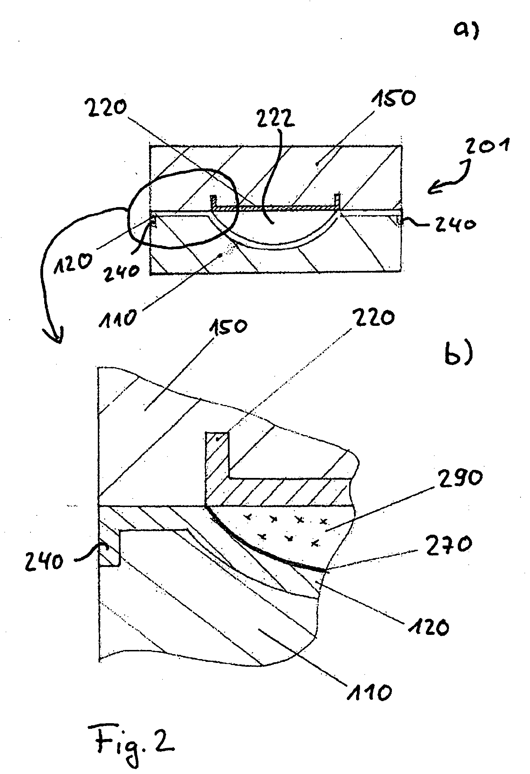

Ein Werkzeug 201 zum Herstellen eines an einem Kunststoffformträger 220 angebrachten Schaumformteils (Fig. 2a) umfasst eine Formteilform (Oberteil) 150 und eine Formteilform (Unterteil) 110. In die Formteilform 110 ist der Formeinsatz 120 eingebracht. Die sich dadurch bildende formschlüssige Verbindung wird durch die Klemmverbindung 240 fixiert. In der Formteilform (Oberteil) 150 ist ein Kunststoffträger 220 angeordnet. An diesem Kunststoffformteilträger 220 wird beim Herstellen das Schaumformteil (nicht dargestellt) angebracht. Das zusammengefügten Werkzeug bildet eine volumenverringerte Kavität 222 aus.

Zum Herstellen eines Bauteils mit Kunststoffträger, Schaumformteil und einem das Schaumformteil bedeckenden Coating 270 wird der Formeinsatz 120 des Werkzeugs 201 mit einem Coatingmaterial bedeckt (siehe Fig. 2b). In der Formteilform 150 wird der Kunststoffformteilträger 220 eingebracht. Formteilform (Oberteil) 150 und Formteilform (Unterteil) 110 mit zugehörigem Formeinsatz 120 werden verschlossen. In die volumenverringerte Kavität 222 wird das Schaumsystem 290 eingebracht. Das Schaumsystem 290 bildet mit dem Coating 270 und dem Kunststoffformteilträger 220 eine feste Verbindung aus. Da der Formeinsatz 120 aus Polyethylen gefertigt ist, bleiben beim Entformen keine oder nur geringe Reste des Coatings 270 an dem Formeinsatz 120 haften.

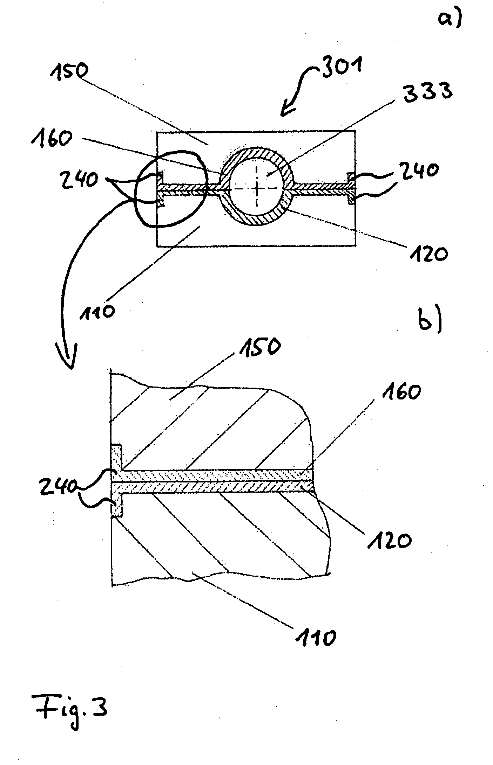

Mit dem Werkzeug 301 wird ein Schaumformteil 333 hergestellt (siehe Fig. 3a und 3b). Sowohl der Formeinsatz (Oberteil) 160 als auch der Formeinsatz (Unterteil) 120 bestehen aus Polyethylen. Die beiden Formeinsätze 120, 160 werden durch die zugehörigen Formteilformen 150 und 110 passgenau aufgenommen. Die Klemmverbindungen 240 sorgen für eine ausreichend feste Verbindung der Formteilformen 150,110 mit den Formeinsätzen 120,160. In die volumenverringerte Kavität 333 wird ein Schaum eingesprüht, sodass sich das Schaumformteil 333 bildet. Durch die Materialauswahl für den Formeinsatz 120, 160 bilden sich keine Rückstände des Schaumformteils an den Formeinsätzen 120, 160.

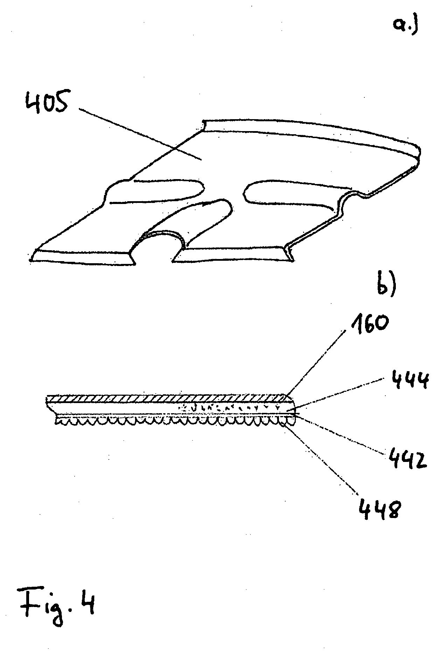

Mit dem Formeinsatz 160 werden thermogeformte Teppiche 405 für Fahrzeugböden hergestellt (siehe Fig. 4b). Dazu wird ein Werkzeug verwendet, wie es in Figur 4b reduziert dargestellt ist. Ein Teppich für Fahrzeugböden weist im Prinzip drei Schichten auf. Zum Einen einen Schaumrücken 444, einen diesem Schaumrücken 444 zugeordneten Teppichträgergewirke 442 und die Schlingenware 448, welche für den Benutzer die eigentliche Teppichoberfläche bildet. Vorliegend besteht die Schlingware 448 aus Velours. Die an der Schlingenware 448 ansetzende Formteilform ist nicht dargestellt. Diese Formteilform begrenzt jedoch die Ausdehnungsmöglichkeiten des Teppichträgergewirkes 442 und der Schlingenware 448. Die für den Schaumrücken 444 benötigte Kavität wird durch den Formeinsatz (Unterteil) 160 gebildet. Diese ist aus Polyethylen gefertigt.

In die Kavität wird ein Schaum eingebracht, sodass sich ein Schaumrücken 444 ausbildet, der eine feste Verbindung mit dem Teppichträgergewirke 442 ausbildet. Durch die Materialauswahl des Formeinsatzes (Unterteil) 160 verbleiben kleine Reste des Schaumrückens 444 am Formeinsatz (Unterteil) 160, sodass der thermogeformte Teppich 405 für Fahrzeugböden im Wesentlichen trennmittelfrei herstellbar ist.

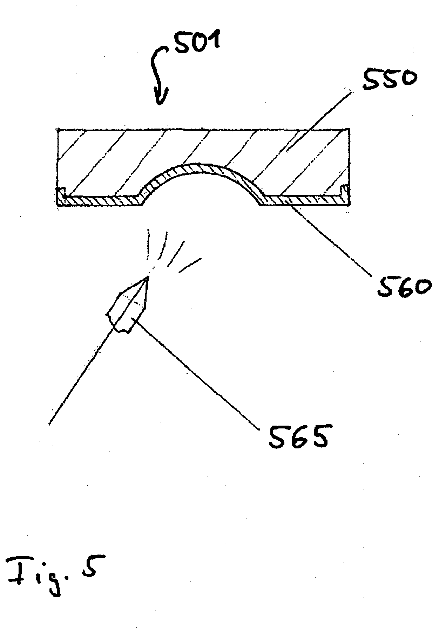

Mit dem Werkzeug 501 werden Sprühhäute hergestellt (siehe Fig. 5). Das Werkzeug besteht aus einer Galvanoformteilform (Oberteil) 550 und einem diesem zugeordneten Galvanoformeinsatz (Oberteil) 560. Der Galvanoformeinsatz (Oberteil) 560 wird durch eine Spritzdüse 565 mit einem Zweikomponentenpolyurethansystem besprüht. Der aus Polyethylen bestehende Galvanoformeinsatz (Oberteil) 560 weist eine Vernarbung auf, welche einer aufgesprühten Haut eine lederartige Strukturierung aufprägt.

Die Spritzdüse 565 verteilt das Polyurethansystem so, dass sich im Laufe der Zeit eine dünne Haut auf der Oberfläche des Galvanoformeinsatzes (Oberteil) 560 ausbildet. Beim Entformen wird diese Haut von dem Galvanoformeinsatz (Oberteil) 560 abgezogen. Durch die Materialauswahl für den Galvanoformeinsatz (Oberteil) 560 verbleiben keine Rückstände der hergestellten Haut an dem Galvanoformeinsatz.

Mit dem Werkzeug 601 wird ein Lenkrad hergestellt. Das Werkzeug 601 weist eine Formteilform (Oberteil) 110 und eine Formteilform (Unterteil) 150 auf. Diese Formteilformen 110, 150 nehmen jeweils einen Formeinsatz 120, 160 auf. Zusätzlich weist das Werkzeug 601 einen Freiraum für die Lenkradnabe 659 auf. Zur Stabilität ist vor dem Einschäumen ein Lenkradkern 667 in dem Werkzeug 601 angebracht. In die sich ausbildende volumenverringerte Kavität 666 wird das Schaumsystem eingesprüht, sodass sich das Lenkrad ausbildet.

### Bezugszeichenliste

- 109: Teilkavität
- 110: Formteil vorn (Unterteil)
- 111: Volumenverringerte Teilkavität
- 120: Formeinsatz (Unterteil)
- 150: Formteil vorn (Oberteil)
- 160: Formeinsatz (Oberteil)
- 201: Werkzeug zum Herstellen eines an einem Kunststoffformträger angebrachten Schaumformteils
- 220: Kunststoffformteilträger
- 222: Volumenverringerte Kavität
- 240: Klemmverbindung
- 270: Coating
- 290: Schaumsystem
- 301: Werkzeug zum Herstellen eines Schaumformteils
- 333: Schaumformteil
- 405: Thermogeformter Teppich
- 444: Schaumrücken
- 446: Teppichträgergewirke
- 448: Schlingenware (Velours)
- 501: Werkzeug zum Herstellen einer Haut
- 550: Galvanoformteil vorn (Oberteil)
- 560: Galvanoformeinsatz (Oberteil)
- 565: Spritzdüse
- 601: Werkzeug
- 659: Freiraum für Lenkradnabe
- 666: Schaumsystem
- 667: Lenkradkern

## Patentansprüche

1. Formeinsatz für eine metallene Formteilform, mit einem Oberteil (160) und einem diesem zugeordneten Unterteil (120), mit einer Kavität, , wobei die Formteilform (120, 160) einem in die Kavität eingebrachten Material,eine Form aufprägt, wobei der Formeinsatz (120, 160) ein trennmittelfrei flächig an der Formteilform anordenbares Spritzgussteil ist,
wobei eine der volumenverringerten Kavität (222) zugeordnete Oberfläche des Formeinsatzes (120, 160) eine geringe oder keine Grenzflächenspannung aufweist,
wobei die der volumenverringerten Kavität (222) zugeordnete Oberfläche des Formensatzes (120, 160) durch einen Kunststoff gebildet ist, aufweisend ein Befestigungselement, welches ein lösbar festes Anordnen mit der Formteilform ermöglicht,
und eine Trägerstruktur, und zwar Hohlräume aufweisend,
wobei er aus zusammengefügten Teilformeinsätzen (120, 160) gebildet ist, wobei
die Teilformeinsätze (120, 160) Verbindungselemente aufweisen,
**dadurch gekennzeichnet, dass** eine Materialdicke des Formeinsatzes (120, 160) zwischen 0,8 mm und 8 mm beträgt, sodass im angeordneten Zustand eine um dieses Maß volumenverringerte Kavität (222) gebildet ist und der Formeinsatz (120, 160) zum Formaufprägen des Materials innerhalb der volumenverringerten Kavität (222) beiträgt,
und, dass der Formeinsatz ein Temperaturleitelement aus Metall aufweist.

2. Vorrichtung zum Herstellen eines Formteils mit einer Formteilform (120, 160) mit einer Kavität, welche einem eingebrachten Material eine Form aufprägt, **dadurch gekennzeichnet, dass** ein Formeinsatz (120, 160) nach Anspruch 1 in der Formteilform trennmittelfrei angeordnet ist, wodurch eine volumenverringerte Kavität (222) gebildet ist, welche einem in die volumenverringerte Kavität (222) eingebrachten Material eine im Vergleich zu einem Einbringen des Materials in die formteilfreie Kavität volumenverringerte Form aufprägt, wobei die volumenverringerte Kavität (222) eine herzustellende Form des Formteils ausprägt, wobei die durch die Formteilform ausgebildete Kavität um die Materialdicken des Formeinsatzes (120, 160) vergrößert ist, wobei die Formteilform ein Oberteil und ein Unterteil aufweist und wobei die Formteilform aus einem Metall oder einer Metalllegierung gefertigt ist,
wobei die Formteilform eine zugeordnete Aufnahme für das Befestigungselement aufweist.

3. Verfahren Zum Herstellen eines Schaumformteils, wobei das Verfahren folgende Schritte aufweist:
Trennmittelfreies Einbringen eines Formeinsatzes gemäß Anspruch 1 in die Formteilform einer Vorrichtung nach Anspruch 2,
b. Einspritzen eines formbaren Materials in die volumenverringerte Kavität (222),
sodass die volumenverringerte Kavität (222) dem Material die Form des Forrnteils aufprägt, sodass ein Formteil entsteht,
c. Entnehmen des Formteils, und zwar als Entfernen des Formeinsatzes (120, 160) und Abwarten der Reaktionszeit des Schaums außerhalb der Formteilform, während durch einen neu eingebrachten Formeinsatz (120, 160) bereits das nächste Schaumformteil gefertigt wird,
wonach der gebrauchte Formeinsatz (120, 160) gereinigt und wiederverwendet wird, nachdem der Schaum durch den Aushärtungsprozess einen festen Körper bildet und das so entstandene Schaumformteil aus dem Formeinsatz (120, 160) ausgeformt worden ist,
d. Entfernen des Formteileinsatzes (120, 160) aus der Formteilform, wobei nach dem Entfernen des Formteils der Formeinsatz (120, 160) gegen einen weiteren Formeinsatz (120, 160) ausgetauscht wird oder ein gebrauchter Formeinsatz (120, 160) gereinigt und wiederverwendet wird.

4. Verfahren nach Anspruch 3, **dadurch gekennzeichnet, dass** vor dem Entfernen des Formeinsatzes (120, 160) weitere Formteile hergestellt werden.

5. Verfahren nach einem der Ansprüche 3 oder 4, **dadurch gekennzeichnet, dass** vor dem Einspritzen des formbaren Materials auf dem Formeinsatz (120, 160) eine Coatingschicht aufgebracht wird, welche beim Herstellen dem Formteil aufgeprägt wird.

6. Verfahren nach einem der Ansprüche 3 bis 5, **dadurch gekennzeichnet, dass** vor dem Einspritzen des formbaren Materials in die volumenverringerte Kavität (222) ein Formteilträger, eingebracht wird.

## Claims

1. Mould insert for a metallic moulding mould, having an upper part (160) and a bottom part (120) allocated to it, with a cavity, the moulding mould providing shape to a material introduced into the cavity, the mould insert (120, 160) being an injection mould part which can be arranged at the moulding mould in a planar manner without use of a mould release agent,
a surface of the mould insert (120, 160), which is assigned to the cavity reduced in volume (222), having little or no interfacial tension,
the surface of the mould insert (120, 160) assigned to the cavity reduced in volume (222) being formed by a plastic,
comprising
a fastening element which allows a releasably fixed arrangement with the moulding mould
and a supporting structure having hollows,
it being formed from joined partial mould inserts (120, 160), the partial mould inserts (120, 160) having connecting elements,
**characterized in that** a material thickness of the mould insert (120, 160) amounts to between 0.8 mm and 8 mm so that in the arranged condition, a cavity reduced in volume (222) by this dimension is formed and the mould insert (120, 160) contributes to providing shape to the material inside the cavity reduced in volume (222);
and **in that** the mould insert (120, 160) contains a temperature conducting element made of metal.

2. Device for manufacturing a moulding with a moulding mould having a cavity which provides shape to an introduced material, **characterized in that** a mould insert (120, 160) according to Claim 1 is arranged in the moulding mould without use of a mould release agent, forming a cavity reduced in volume (222), which provides a material introduced into the cavity reduced in volume (222) with a shape reduced in volume with respect to an introduction of the material into the cavity free of a moulding, the cavity reduced in volume (222) forming a shape of the moulding to be produced, the cavity formed by the moulding mould being enlarged by the material thicknesses of the mould insert (120, 160), the moulding mould having an upper part and a bottom part and the moulding mould being made of a metal or a metal alloy,
the moulding mould having an allocated seat for the fastening element.

3. Method of manufacturing a moulded foam part, comprising the following steps:
introducing a mould insert (120, 160) according to Claim 1 into the moulding mould of a device according to Claim 2, without use of a mould release agent,
b. injecting a mouldable material into the cavity reduced in volume (222) so that the cavity reduced in volume (222) provides the material with the shape of the moulding so that a moulding is produced,
c. removing the moulding by removing the mould insert (120, 160) and waiting for the reaction time of the foam outside the moulding mould while the next moulded foam part is already being manufactured in a newly introduced mould insert (120, 160),
after which the used mould insert (120, 160) is cleaned and reused,
after the foam forms a solid body due to the curing process and the moulded foam part produced in this manner has been removed from the mould insert (120, 160),
d. removing the mould insert (120, 160) from the moulding mould, where after removal of the moulding the mould insert (120, 160) is replaced by another mould insert (120, 160) or a used mould insert (120, 160) is cleaned and reused.

4. Method according to Claim 3, **characterized in that** before removal of the mould insert (120, 160) other mouldings are produced.

5. Method according to one of Claims 3 or 4, **characterized in that** before injection of the mouldable material, a coating layer is applied on the moulding insert (120, 160) which during production is applied on the moulding.

6. Method according to one of Claims 3 to 5, **characterized in that** before injection of the mouldable material, a moulding carrier is introduced into the cavity reduced in volume (222).

## Revendications

1. Insert de moule, destiné à un moule métallique pour pièce moulée, pourvu d'une partie supérieure (160) et d'une partie inférieure (120) qui lui est associée, pourvu d'une cavité, le moule pour pièce moulée imprimant une forme à une matière introduite dans la cavité,
l'insert de moule (120, 160) étant une pièce moulée par injection, susceptible d'être placée à plat, sans aucun agent de séparation sur le moule pour pièce moulée,
une surface de l'insert de moule (120, 160) associée à la cavité de volume réduit (222) présentant une tension interfaciale réduite, voire aucune,
la surface de l'insert de moule (120, 160) associée à la cavité de volume réduit (222) étant formée d'une matière plastique,
comportant
un élément de fixation, lequel permet un placement solide amovible avec le moule pour pièce moulée,
et une structure porteuse, à savoir comportant des espaces creux,
sachant qu'il est formé d'inserts de moules partiels (120, 160) assemblés, les inserts de moules partiels (120, 160) comportant des éléments d'assemblage,
**caractérisé en ce qu'**une épaisseur de matière de l'insert de moule (120, 160) se situe entre 0,8 mm et 8 mm, de telle sorte, qu'en position placée, il se forme une cavité d'un volume réduit (222) de la valeur de cette dimension et que l'insert de moule (120, 160) participe à l'impression de la forme à la matière à l'intérieur de la cavité de volume réduit (222),
et **en ce que** l'insert de moule comporte un élément conducteur thermique en métal.

2. Dispositif, destiné à fabriquer une pièce moulée à l'aide d'un moule pour pièce moulée (120, 160), pourvu d'une cavité, lequel imprime une forme à une matière introduite, **caractérisé en ce qu'**un insert de moule (120, 160) selon la revendication 1 est placé sans aucun agent de séparation dans le moule pour pièce moulée, ce qui donne lieu à la formation d'une cavité de volume réduit (222), laquelle imprime à une matière introduite dans la cavité de volume réduit (222) une forme de volume réduit en comparaison d'une introduction de la matière dans la cavité exempte de pièce moulée, la cavité de volume réduit (222) imprimant une forme à créer à la pièce moulée, la cavité réalisée par le moule pour pièce moulée étant agrandie de la valeur des épaisseurs de matière de l'insert de moule (120, 160), le moule pour pièce moulée comportant une partie supérieure et une partie inférieure et le moule pour pièce moulée étant fabriqué en un métal ou en un alliage métallique,
le moule pour pièce moulée comportant un logement associé pour l'élément de fixation.

3. Procédé, destiné à fabriquer une pièce moulée en mousse, le procédé comportant les étapes suivantes consistant à :
a. introduire dans aucun agent de séparation un insert de moule selon la revendication 1 dans le moule pour pièce moulée d'un dispositif selon la revendication 2,
b. injecter une matière déformable dans une cavité de volume réduit (222), de telle sorte que la cavité de volume réduit (222) imprime à la matière la forme d'une pièce moulée, pour donner naissance à une pièce moulée,
c. retirer la pièce moulée, à savoir en enlevant l'insert de moule (120, 160) et attendre pendant le temps de réaction de la mousse à l'extérieur du moule pour pièce moulée, alors que par introduction d'un nouvel insert de moule (120, 160), l'on fabrique déjà la prochaine pièce moulée en mousse, suite à quoi l'on nettoie et l'on réutilise l'insert de moule (120, 160) utilisé, une fois que par un processus de solidification, la mousse forme un corps solide et que la pièce moulée en mousse ainsi produite ait été démoulée de l'insert de moule (120, 160),
d. retirer l'insert de moule (120, 160) du moule pour pièce moulée, après le retrait de la pièce moulée, l'insert de moule (120, 160) étant remplacé par un autre insert de moule (120, 160) ou un insert de moule (120, 160) utilisé étant nettoyé ou réutilisé.

4. Procédé selon la revendication 3, **caractérisé en ce qu'**avant le retrait de l'insert de moule (120, 160), l'on fabrique des pièces moulées supplémentaires.

5. Procédé selon l'une quelconque des revendications 3 ou 4, **caractérisé en ce qu'**avant l'injection de la matière déformable sur l'insert de moule (120, 160), l'on applique une couche de revêtement, laquelle est imprimée lors de la fabrication de la pièce moulée.

6. Procédé selon l'une quelconque des revendications 3 à 5, **caractérisé en ce qu'**avant l'injection de la matière déformable dans la cavité de volume réduit (222), l'on introduit un support de pièce moulée.
